# EUROPÄISCHE PATENTSCHRIFT

(11) **EP 1 897 411 B1**
(45) Veröffentlichungstag und Bekanntmachung des Hinweises auf die Patenterteilung: **16.03.2011**
(21) Anmeldenummer: 06753266.3
(22) Anmeldetag: 09.06.2006
(51) Int. Cl.: H05B 3/14, H05B 3/84, B29C 45/14, B60R 1/06

(54) **VERFAHREN ZUR HERSTELLUNG EINES BEHEIZBAREN FORMKÖRPERS, INSBESONDERE FÜR AUSSENRÜCKBLICKSPIEGEL MIT EINEM HEIZELEMENT**
METHOD FOR PRODUCING A HEATABLE MOULDED BODY, IN PARTICULAR FOR EXTERIOR REARVIEW MIRRORS, WITH A HEATING ELEMENT
PROCEDE DE FABRICATION D'UN CORPS MOULE POUVANT ETRE CHAUFFE, EN PARTICULIER POUR UN RETROVISEUR EXTERIEUR, AVEC UN ELEMENT CHAUFFANT

(30) Priorität: 10.06.2005 DE 102005026766
(43) Veröffentlichungstag der Anmeldung: 12.03.2008
(73) Patentinhaber: SMR Patents S.à.r.l., 1653 Luxembourg (LU)
(72) Erfinder: KÜRSCHNER, Norbert, 30900 Wedemark (DE)
(74) Vertreter: Rausch, Gabriele
(86) Internationale Anmeldenummer: PCT/DE2006/000998
(87) Internationale Veröffentlichungsnummer: WO 2006/131108

(56) Entgegenhaltungen:
- EP-A- 0 732 865
- DE-A1- 19 848 860
- FR-A- 2 681 753
- US-A- 5 223 976
- US-A- 5 683 747
- PATENT ABSTRACTS OF JAPAN Bd. 013, Nr. 090 (M-803), 2. März 1989 (1989-03-02) & JP 63 284048 A (SAN RAIZU KOGYO KK), 21. November 1988 (1988-11-21)

## Beschreibung

Die Erfindung betrifft ein Verfahren zur Herstellung eines beheizbaren Formkörpers, insbesondere für Außenrückblickspiegel mit einem Heizelement, das als elektrisch kontaktierbares Faservlies ausgebildet ist und einen beheizbaren Formkörper als solchen.

Aus der DE 195 09 153 A1 ist ein Formkörper mit einer Heizeinrichtung bekannt, Insbesondere für Außenrückblickspiegel eines Kraftfahrzeuges, mit einer Heizschicht, die stromleitend verbundene und mit einem Bindemittel versteifte Carbonfasern aufweist, die mit Stromanschlüssen versehen und in einem Pressverfahren durch einen Kunststoff verstärkt sind, der in die Freiräume zwischen den Carbonfasern eindringt. Nach der Versteifung der Carbonfaser durch das Bindemittel sind die Freiräume offen oder nur teilweise geschlossen, so dass bei einem Spritzgießverfahren der durch die Frelräume dringende Kunststoff die Carbonfasern hinterspritzt. Auf die carbonfasernahe Oberfläche des Formkörpers wird ein verspiegeltes Glas aufgeklebt, das dann in einen Außenrückblickspiegel zusammen mit dem beheizbaren Formkörper eingesetzt wird.

Nachteilig an dem bekannten Stand der Technik ist die Tatsache, dass die Carbonfasern nicht vollständig in den Kunststoff eingebettet sind, so dass die Carbonfasern aus der Oberfläche herausragen. Dies hat zur Folge, dass eine elektrische Kontaktierung mit der verspiegelten Rückseite des aufgeklebten Glases erfolgt, was zu einer verstärkten Korrosion führt. Das Spiegelglas verliert die Reflektionsfähigkeit und muss aufwendig ausgetauscht werden.
JP 63284048 beschreibt einen Heizfolie, die aus Kunststoff und Kohlestofffasern hergestellt ist. Allerdings sind auch hier die Kohlestofffasern nicht vollständig von Kunststoff umfasst.
Aufgabe der Erfindung ist es daher, ein verbessertes Verfahren zur Herstellung eines gattungsgemäßen Formkörpers sowie einen verbesserten Formkörper bereitzustellen. Erfindungsgemäß wird diese Aufgabe dadurch gelöst, dass in einem Formwerkzeug, insbesondere Spritzgieß- oder Spritzprägewerkzeug eine erste Kunststoffschicht erzeugt oder eingelegt wird, die für elektrisch leitende Fasern, z. B. Kohlefasern eines Kohlfaser- oder Kohlefaser-Glasfasermischvlieses, das auf die erste Kunststoffschicht aufgelegt wird, undurchlässig ist. Die erste Kunststoffschicht wird entweder vorgefertigt und in das Formwerkzeug eingelegt oder in einem ersten Arbeitsvorgang, z. B. Spritzgießvorgang oder Spritzprägevorgang, beispielsweise mit einer Drehtellerform, in dem Formwerkzeug erzeugt. Dann wird das Kohlefaservlies oder Mischvlies in die Form eingelegt.

Anschließend wird eine zweite Kunststoffschicht auf die erste Kunststoffschicht und das Faservlies aufgebracht, indem Kunststoff in das Formwerkzeug eingespritzt oder eingelegt wird. Dabei wird das Faservlies zwischen den beiden Kunststoffschichten eingeschlossen, so dass das Faservlies bis auf die notwendigen elektrischen Anschlüsse, die zur Zuleitung der elektrischen Energie zur Erzeugung des Heizeffektes notwendig sind, elektrisch isoliert ist. Insbesondere findet eine elektrische Isolation in Richtung auf die Seite der ersten Kunststoffschicht statt, die dem Faservlies abgewandt ist, so dass bei einer Aufbringung eines Spiegelmaterials, einer reflektierenden Beschichtung, keine Beeinträchtigung durch eine verstärkte Korrosion auftritt. Es ist vorgesehen, dass die dem Faservlies abgewandte Seite der ersten Kunststoffschicht, ggf. die abgewandte Seite der zweiten Kunststoffschicht, verspiegelt, insbesondere besputtert oder verchromt oder anderweitig reflektierend beschichtet wird, so dass eine fertige Baugruppe, bestehend aus beheizbarem Formkörper und Spiegel, hergestellt wird. Um eine ansprechende optische Qualität zu erreichen, ist die jeweils zu beschichtende Seite der Kunststoffschicht nachbearbeitet, vorzugsweise poliert, um eine Oberflächenrauheit zu erhalten, die der von Glas entspricht.

Eine Weiterbildung der Erfindung sieht vor, dass die beiden Kunststoffschichten stoffschlüssig miteinander verbunden werden, insbesondere, dass die erste und die zweite Kunststoffschicht miteinander verschmelzen, so dass zumindest an den Rändern das Faservlies vollständig umschlossen ist. Durch die stoffschlüssige Verbindung, hervorgerufen durch Wärme und Druck, kann das Kohlefaservlies in die Kunststoffschichten eingebettet werden, was einen verbesserten Wärmeübergang zur Folge hat, wodurch eine schnellere Beheizung, beispielsweise der Spiegelfläche, stattfindet.

Die erste Kunststoffschicht kann durch Spritzguss oder Spritzprägen erzeugt werden, wobei das Spritzgießwerkzeug oder Spritzprägewerkzeug Teil der Endform für den Formkörper ist. Nach Herstellung der ersten Kunststoffschicht wird die Form geöffnet, das Faservlies eingelegt und ein anderes Formgegenstück wird der ersten Kunststoffschicht zugeordnet, so dass durch einen erneuten Spritzgieß- oder Spritzprägevorgang der endgültige Formkörper erzeugt werden kann. Das Formwerkzeug ist dabei vorteilhafter Weise als Drehtellerform ausgebildet, so dass mit jedem Arbeitstakt zumindest ein Formstück erzeugt werden kann, indem wechselweise die jeweiligen Gegenstücke dem ersten Formteil zugeordnet werden.

Alternativ zu der Erzeugung der ersten Kunststoffschicht in dem Formwerkzeug ist es möglich, dass die zweite Kunststoffschicht im sogenannten in-mould-Verfahren aufgebracht wird, also dass zunächst eine fertige Folie mit Faservlies eingelegt und dann diese Kombination hinterspritzt wird.

Zur Erreichung eines möglichst guten Wärmeleiteffektes ist vorgesehen, dass die erste Kunststoffschicht relativ dünn ausgebildet ist, beispielsweise so dick wie das Faservlies. Die notwendige Steifigkeit wird durch das Aufbringen der zweiten Kunststoffschicht gewährleistet, die dazu beispielsweise mit Verstärkungsbrücken ausgebildet ist. Alternativ ist es möglich, dass die erste Kunststoffschicht steif ausgebildet ist und erst die zweite Kunststoffschicht eine glatte, äußere Oberfläche ausbildet.

Um einen einsatzbereiten und haltbaren Außenspiegel zu erhalten, wird in einer Weiterentwicklung der Erfindung nach dem Verspiegeln eine kratzfeste Beschichtung aufgebracht, beispielsweise in Gestalt einer Dünnglasschicht. Dünnglas hat den Vorteil eines geringen Gewichtes, guten optischen Eigenschaften sowie einer sehr guten mechanischen Stabilität.

Der beheizbare Formkörper sieht eine erste Kunststoffschicht, ein Faservlies mit elektrischen Kontakten und eine zweite Kunststoffschicht vor, wobei die zweite Kunststoffschicht auf das Faservlies und die erste Kunststoffschicht aufgespritzt oder aufgeprägt ist. Das Faservlies ist dabei bis auf die elektrischen Kontakte vollständig elektrisch isoliert und wird von den Kunststoffschichten im Wesentlichen eingeschlossen. Dadurch ist es möglich, dass eine weitgehend gegen Korrosion geschützte Oberfläche auf der dem Faservlies abgewandten Seite der Kunststoffschichten bereitgestellt wird, so dass aufgebrachte Spiegelschichten optisch nicht beeinträchtigt werden.

Die Kunststoffschichten sind dazu zweckmäßiger Weise stoffschlüssig miteinander verbunden, so dass das Faservlies eingekapselt wird, ggf. ragt das Kohlefaservlies an den Schmalseiten heraus. Je nach Einsatzgebiet können die Kunststoffschichten aus unterschiedlichen Materialien bestehen; während beispielsweise die erste Kunststoffschicht auf der dem Faservlies abgewandten Seite möglichst glatt sein muss, damit eine direkte Beschichtung mit einem reflektierenden Material möglich ist, kann für die zweite Kunststoffschicht eine hohe mechanische Festigkeit erforderlich sein, damit eine hinreichende Formstabilität gewährleistet ist. Darüber hinaus ist es wesentlich, dass keine Fasern des Faservlieses durch die Kunststoffschichten hindurch an diejenige Oberfläche dringen, die mit einem reflektierenden Medium versehen ist. Die reflektierende Beschichtung kann insbesondere durch Sputtern, Verchromen oder Metallbedampfungen erfolgen.

Vorteilhafterweise ist die reflektierende Beschichtung mit einer kratzfesten Beschichtung versehen, um diese vor Umwelteinflüssen zu schützen. Optisch und mechanisch vorteilhaft ist dabei Dünnglas, das über der reflektierenden Beschichtung des Formkörpers angeordnet ist. Die Dünnglasschicht ist in einer Variante über einen Klebstoff, z. B. Silikon-Gel, EP-Klebstoff oder PUR-Klebstoff mit der reflektierenden Schicht verbunden, um eine sichere Befestigung und eine gute optische Qualität zu erzielen.

Eine Alternative sieht vor, dass die reflektierende Beschichtung ihrerseits mit zinndotiertem Indiumoxid beschichtet ist, was einerseits durchsichtig und andererseits leitfähig ist. Dadurch wird es möglich, neben dem Heizvlies über die Schicht aus zinndotiertem Indiumoxid eine weitere Wärmequelle bereitzustellen, mit der eine Vereisung des Spiegels schnell beseitigt werden kann.

Zusätzlich oder ergänzend ist vorgesehen, dass über der reflektierenden Beschichtung eine Flüssigkristallschicht angeordnet ist, die von einer kratzfesten Beschichtung, insbesondere Dünnglas abgedeckt ist. Über diese Flüssigkeitskristallschicht kann durch Anlegen einer Spannung der Spiegel abgedunkelt werden, wodurch die Blendgefahr für den Fahrer reduziert wird. Für eine automatische Abblendung des Außenspiegels ist die Flüssigkristallschicht mit elektrischen Kontakten versehen, die mit einer Spannungsquelle und einem Helligkeitssensor verbunden ist, der bei Überschreiten eines festgelegten Höchstwertes den Spiegel abdunkelt.

Nachfolgend wird die Erfindung anhand der Figuren näher erläutert werden. Es zeigen:
- Figur 1 -: einen Formkörper in Schnittansicht,
- Figur 2 -: einen Formkörper nach Fig. 1 mit reflektierender und Dünnglasbeschichtung;
- Figur 3 -: einen Formkörper nach Fig. 1 mit reflektierender und kratzfester Beschichtung
- Figur 4 -: einen Formkörper nach Fig. 2 mit einer Flüssigkristallschicht, sowie
- Figur 5 -: einen Formkörper nach Fig. 2 mit einer Klebstoffschicht

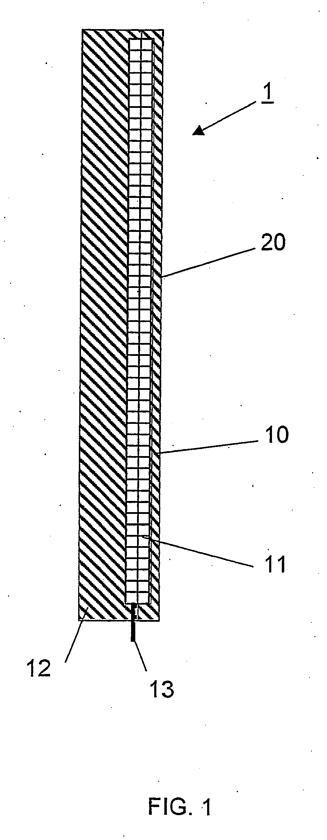

Die Figur 1 zeigt einen Formkörper 1 in Schnittansicht. Der Formkörper 1 besteht aus einer ersten Kunststoffschicht 10 und einer stoffschlüssig mit dieser verbundenen zweiten Kunststoffschicht 12, wobei zwischen der ersten Kunststoffschicht 10 und der zweiten Kunststoffschicht 12 ein Kohlefaservlies 11 eingelegt und eingeschlossen ist. Lediglich elektrische Kontakte 13, die mit dem elektrisch leitenden Faservlies, vorliegend einem Kohlefaservlies 11 verbunden sind, ragen zu Zwecken einer elektrischen Kontaktierung aus dem Formkörper 1 heraus. Der Figur ist zu entnehmen, dass das Kohlefaservlies 11 vollständig von den Kunststoffschichten 10, 12 umschlossen ist und diese stoffschlüssig miteinander verbunden sind. Auf diese Art und Weise wird gewährleistet, dass eine vollständige elektrische Isolierung des Kohlefaservlieses 11, ausgenommen die elektrischen Kontakte 13, vorhanden ist. Statt eines reinen Kohlefaservlieses kann auch ein Mischvlies aus Kohlefasern und Glasfasern vorgesehen sein oder ein alternatives Faservlies, dessen Fasern zumindest teilweise elektrisch leitend sind.

Sofern ein Spiegelglas auf der dem Kohlefaservlies 11 abgewandten Seite 20 der ersten Kunststoffschicht 10 aufgebracht werden soll, besteht keinerlei Gefahr, dass durch einen elektrischen Kontakt eine verstärkte Korrosion der verchromten, versilberten oder auf andere Art und Weise reflektierenden Glasschicht erfolgt.

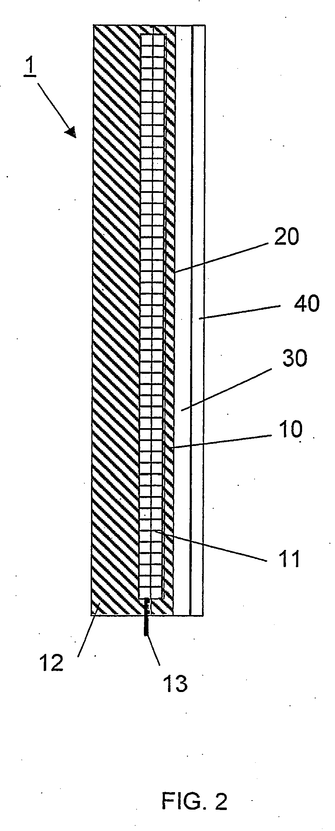

Durch die Vermeidung eines Durchtrittes der Fasern des Kohlefaservlieses 11 ist es möglich, dass zumindest eine Außenseite des Formkörpers 1 unmittelbar reflektierend beschichtet wird, beispielsweise besputtert, verchromt oder metallbedampft. Auf diese Art und Weise können mit wenigen Verfahrensschritten und einem geringen Materialeinsatz, Formkörper 1 hergestellt werden, die als beheizbare Spiegel in Rückblickspiegel, insbesondere Außenrückblickspiegel, eingebaut werden können. Der Formkörper 1 dieser Ausführungsform dient als Substrat für die erfindungsgemäße Ausführung nach Figur 2,3,4 oder 5.

In der Figur 2 ist der Formkörper 1 gemäß Figur 1 dargestellt, auf dessen einer Seite eine reflektierende Schicht 30 aufgebracht ist, beispielsweise eine Chromschicht. Auch andere reflektierende Schichten 30 können auf der Außenseite des Formkörpers 1 aufgebracht sein, so dass der Formkörper 1 als Trägerplatte für einen Spiegel, insbesondere einen Außenspiegel, wirkt. Das Heizvlies 11 ist dabei relativ nah an derjenigen Oberfläche des Formkörpers 1 angeordnet, auf der die reflektierende Beschichtung 30 aufgebracht ist, um möglichst schnell eine Enteisung des Außenspiegels bewirken zu können. Um die reflektierende Beschichtung 30 vor Umwelteinflüssen zu schützen, ist über diese eine kratzfeste Beschichtung 40 aufgebracht, die beispielsweise aus Dünnglas besteht.

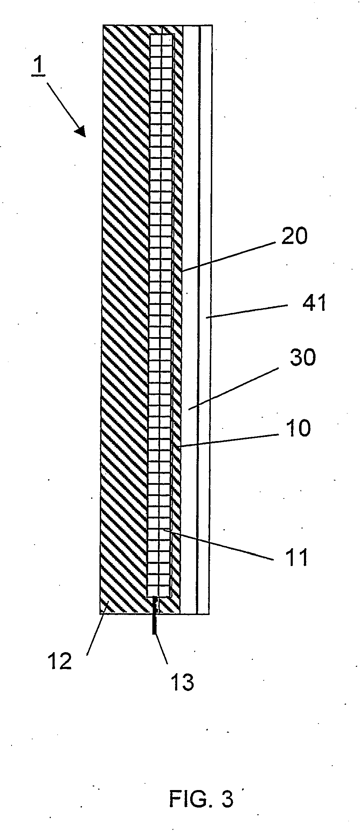

In der Figur 3 ist ein beschichteter Formkörper 1 gemäß Figur 2 dargestellt. Anstatt einer Dünnglasschicht 40 ist auf der reflektierenden Schicht 30 zinndotiertes Indiumoxid 41 aufgebracht, das sowohl durchsichtig als auch elektrisch leitend ist. Durch nicht dargestellte Kontakte kann Strom durch die kratzfeste Beschichtung 41 geleitet werden, so dass zusätzlich zu dem Heizvlies 11 eine weitere Wärmequelle bereit steht.

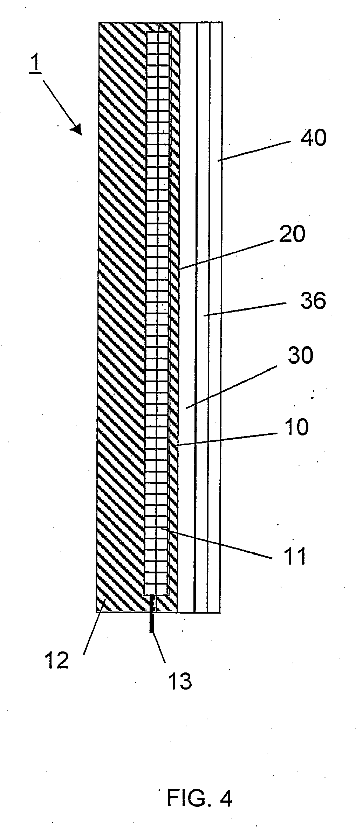

In der Figur 4 ist ein Formkörper 1 gemäß Figur 2 dargestellt, bei dem zwischen der reflektierenden Beschichtung 30 und der kratzfesten Beschichtung 40, hier als Dünnglas ausgeführt, eine Flüssigkristallschicht 36 angeordnet ist, die durch Anlegen einer Spannung in ihrer Helligkeit bzw. Lichtdurchlässigkeit veränderbar ausgebildet ist. Dadurch ist es möglich, manuell oder automatisch die reflektierte Lichtmenge zu variieren, beispielsweise indem über einen Helligkeitssensor die auf die reflektierende Schicht 30 auftreffende Lichtmenge gemessen und bei Überschreiten eines festgelegten Wertes die Flüssigkristallschicht 36 abgedunkelt wird.

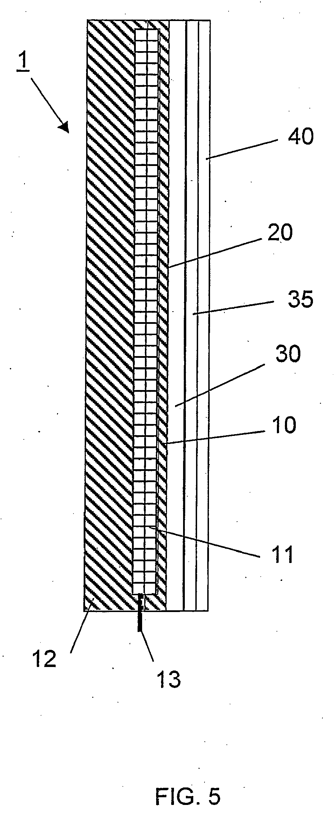

Die Figur 5 zeigt einen Formkörper 1 gemäß Figur 2, bei dem die Dünnglasschicht 40 über eine Klebstoffschicht 35, beispielsweise Silikongel auf der reflektierenden Schicht 30 befestigt ist. Eine gleichmäßige Verteilung der Klebstoffschicht 35, insbesondere bei sphärisch gekrümmten Oberflächen, erfolgt vorteilhafterweise dadurch, dass nach Aufbringen des Klebstoffes 35 der Formkörper 1 Vibrationen ausgesetzt wird, so dass eine gleichmäßige Verteilung des Klebstoffes 35 zwischen der reflektierenden Beschichtung 30 und der kratzfesten Beschichtung 40 erfolgt.

## Patentansprüche

1. Verfahren zur Herstellung eines beheizbaren Formkörpers, insbesondere für Außenrückblickspiegel, mit einem Heizelement, das als elektrisch kontaktierbares Kohlefaservlies ausgebildet ist, wobei in einem Formwerkzeug eine erste Kunststoffschicht (10) erzeugt oder eingelegt wird, und auf diese erste Kunststoffschicht (10) das Faservlies (11) aufgelegt wird und anschließend eine zweite Kunststoffschicht (12) auf die erste Kunststoffschicht (10) und das Faservlies (11) aufgebracht wird, wobei die erste und zweite Kunststoffschicht (10, 12) das Faservlies (11) bis auf die elektrischen Anschlüsse (13) vollständig elektrisch isolieren, **dadurch gekennzeichnet dass** die dem Faservlies (11) abgewandte Seite (20) der ersten Kunststoffschicht (10) verspiegelt, insbesondere besputtert oder verchromt wird und dass die zu verspiegelnde Seite (20) der ersten Kunststoffschicht (10) nach dem Formvorgang und vor der Beschichtung poliert wird.

2. Verfahren nach Anspruch 1, **dadurch gekennzeichnet, dass** das Faservlies (11) als ein Kohlefaservlies oder ein Mischvlies aus Kohle- und Glasfaser ausgebildet ist und dass die erste Kunststoffschicht (10) in einer Dicke erzeugt wird, die der Dicke des Kohlefaservlieses (11) entspricht.

3. Verfahren nach Anspruch 1, **dadurch gekennzeichnet, dass** die zweite Kunststoffschicht in einem in-mould-Verfahren aufgebracht wird.

4. Verfahren nach Anspruch 1, **dadurch gekennzeichnet, dass** nach dem Verspiegeln eine Dünnglasschicht (40) aufgebracht wird und dass zwischen der verspiegelten Schicht (30) und der Dünnglasschicht (40) eine Klebstoffschicht, insbesondere eine Silikongel-Schicht (35), eine EP-Klebstoffschicht oder eine PUR-Klebstoffschicht angeordnet wird.

5. Beheizbarer Formkörper für Außenrückblickspiegel nach Anspruch 1 hergestellt **dadurch gekennzeichnet, dass** die Außenschicht (20) der ersten Kunststoffschicht (10) reflektierend beschichtet, insbesondere besputtert, verchromt oder metallbedampft ist und dass über der reflektierenden Beschichtung (30) eine Dünnglasschicht (40) angeordnet ist.

6. Beheizbarer Formkörper für Außenrückblickspiegel nach Anspruch 1 hergestellt **dadurch gekennzeichnet, dass** über der reflektierenden Beschichtung (30) eine Flüssigkristallschicht (36) angeordnet ist, die von einer kratzfesten Beschichtung (40, 41), insbesondere Dünnglas (40) abgedeckt ist.

7. Formkörper nach Anspruch 6, **dadurch gekennzeichnet, dass** die Flüssigkristallschicht (36) mit elektrischen Kontakten versehen ist, die mit einer Spannungquelle und einem Helligkeitsensor verbunden ist, der bei Überschreiten eines festgelegten Höchstwertes die Flüssigkristallschicht (36) verdunkelt.

## Claims

1. A method for producing a heatable moulded body, in particular for exterior rear view mirrors, comprising a heating element, provided as electrically contactable nonwoven carbon fabric, wherein in a moulding tool, a first plastic layer (10) is created or inserted, and the nonwoven fabric (11) is placed onto this first plastic layer (10), and subsequently a second plastic layer (12) is placed onto the first plastic layer (10) and the nonwoven fabric (11), wherein the first and the second plastic layer (10, 12) insulate the nonwoven fabric (11) completely, besides the electrical connections (13), **characterised in that** the side (20) of the first plastic layer (10), facing away from the nonwoven fabric (11), is mirrored, in particular sputtered or chromed, and that the side (20) to be mirrored of the first plastic layer (10) is polished after the moulding process and before the coating.

2. A method according to claim 1, **characterised in that** the nonwoven fabric (11) is provided as a nonwoven carbon fibre fabric, or as a mixed nonwoven fabric, comprised of carbon and glass fibre, and the first plastic layer (10) is generated in a thickness, which corresponds to the thickness of the nonwoven carbon fibre fabric (11).

3. A method according to claim 1, **characterised in that** the second plastic layer is provided in an in-mould process.

4. A method according to claim 1, **characterised in that** a thin glass layer (40) is deposited after mirroring, and between the mirrored layer (30) and the thin glass layer (40) a glue layer, in particular a silicone gel layer (35), an EP-glue layer, or a PUR-glue layer, is disposed.

5. A heatable moulded body for exterior rear view mirrors produced according to claim 1, **characterised in that** the exterior layer of the first plastic layer (10) is coated in a reflective manner, in particular sputtered, chromed, or metal vapour deposited, and that a thin glass layer (40) is disposed over the reflective coating (30).

6. A heatable moulded body for exterior rear view mirrors produced according to claim 1, **characterised in that** a liquid crystal layer (36) is disposed over the reflective coating (30), wherein said liquid crystal layer (36) is covered by a scratch resistant coating (40, 41), in particular thin glass (40).

7. A moulded body according to claim 6, **characterised in that** the liquid crystal layer (36) is provided with electrical contacts, which are connected to a voltage source and a brightness sensor, which darkens the liquid crystal layer (36), when a predetermined maximum value is passed.

## Revendications

1. Procédé de fabrication d'un corps moulé pouvant être chauffé, notamment pour rétroviseurs extérieurs, avec un élément chauffant, qui est réalisé en tant que nontissé en fibres de carbone pouvant être mis en contact électrique, dans lequel une première couche de plastique (10) est produite ou insérée dans un outil de moulage, et le nontissé en fibres (11) est enduit sur cette première couche de plastique (10), puis une seconde couche de plastique (12) est appliquée sur la première couche de plastique (10) et le nontissé en fibres (11), dans lequel la première et la seconde couche de plastique (10, 12) isolent électriquement entièrement le nontissé en fibres (11) mis à part les raccords électriques (13), **caractérisé en ce que** le côté (20) de la première couche de plastique (10) détourné du nontissé en fibres (11) est métallisé, notamment pulvérisé ou chromé et que le côté (20) de la première couche de plastique (10) à métalliser est poli après le processus de moulage et avant l'enduction.

2. Procédé selon la revendication 1, **caractérisé en ce que** le nontissé en fibres (11) est réalisé en tant que nontissé en fibres de carbone ou nontissé mixte en fibres de carbone et de verre et que la première couche de plastique (10) est fabriquée à une épaisseur qui correspond à l'épaisseur du nontissé en fibres de carbone (11).

3. Procédé selon la revendication 1, **caractérisé en ce que** la seconde couche de plastique est appliquée dans un procédé in-mould.

4. Procédé selon la revendication 1, **caractérisé en ce qu'**une couche de verre mince (40) est appliquée après la métallisation et qu'une couche adhésive, notamment une couche de gel de silicium (35), une couche adhésive de EP ou une couche adhésive de PUR, est disposée entre la couche métallisée (30) et la couche de verre mince (40).

5. Corps moulé pouvant être chauffé pour rétroviseurs extérieurs fabriqué selon la revendication 1, **caractérisé en ce que** la couche externe (20) de la première couche de plastique (10) est enduite de manière réfléchissante, notamment pulvérisée, chromée ou métallisée au vide et qu'une couche de verre mince (40) est disposée au-dessus du revêtement réfléchissant (30).

6. Corps moulé pouvant être chauffé pour rétroviseurs extérieurs fabriqué selon la revendication 1, **caractérisé en ce qu'**une couche de cristal liquide (36) est disposée au-dessus du revêtement réfléchissant (30), laquelle est recouverte d'un revêtement résistant à l'abrasion (40, 41), notamment de verre mince (40).

7. Corps moulé selon la revendication 6, **caractérisé en ce que** la couche de cristal liquide (36) est pourvue de contacts électriques qui sont reliés à une source de tension et un capteur de luminosité qui assombrit la couche de cristal liquide (36) en cas de dépassement d'une valeur maximale définie.
